# EUROPEAN PATENT SPECIFICATION

(11) **EP 3 615 808 B1**
(45) Date of publication and mention of the grant of the patent: **05.05.2021**
(21) Application number: 18723061.0
(22) Date of filing: 16.04.2018
(51) Int. Cl.: F04D 13/02, F01P 5/12, F04D 13/06, F16H 57/04, F16H 61/00

(54) **PUMP ASSEMBLY WITH ELECTRIC DRIVE AND WITH MECHANICAL DRIVE COMPRISING TRANSMISSION MEANS**
PUMPENANORDNUNG MIT ELEKTRISCHEM ANTRIEB UND MECHANISCHEM ANTRIEB MIT GETRIEBEVORRICHTUNG
ENSEMBLE POMPE À ENTRAÎNEMENT ÉLECTRIQUE ET ENTRAÎNEMENT MÉCANIQUE COMPRENANT DES MOYENS DE TRANSMISSION

(30) Priority: 27.04.2017 IT 201700045896
(43) Date of publication of application: 04.03.2020
(73) Proprietor: Industrie Saleri Italo S.P.A., 25065 Lumezzane, Brescia (IT)
(72) Inventor: SURACE, Alfonso, 25065 Lumezzane (Brescia) (IT); PEDERSOLI, Marco, 25065 Lumezzane (Brescia) (IT)
(74) Representative: Gamba, Alessandro
(86) International application number: PCT/IB2018/052625
(87) International publication number: WO 2018/197990

(56) References cited:
- JP-A- 2003 239 852
- US-A1- 2003 098 186
- US-A1- 2015 314 769
- US-B2- 8 636 090

## Description

The present invention concerns a pump assembly for a cooling system of a vehicle, preferably for the cooling of an engine assembly, e.g. with internal combustion, or for the cooling of other vehicle components, e.g. the transmission assembly, or the turbo assembly, or the exhaust gas recirculation assembly.

In the specific case of engine cooling, as is well known, it is advisable to vary the intensity of the cooling action during normal use.

For example, intense cooling is required when the engine is running at full speed or in towing conditions or on an uphill road or at high ambient temperatures.

In other conditions of use, however, it is advisable for the cooling not to be accentuated, for example when starting the engine or at the end of use.

Similar variable cooling modes may likewise be considered in the cooling of other vehicle components.

In the state of the art, cooling pumps are known in which such need has been met.

Specifically, electrically driven cooling pumps are known, wherein the rotation speed of the impeller is regulated by an electric drive and thus the amount of coolant moved by the impeller to circulate in the cooling system is regulated.

Mechanically operated pumps wherein the rotation of the impeller is linked to the engine RPM are also known; in such solutions, the regulation of the quantity of coolant is delegated to specific regulation elements, located upstream or downstream of the impeller, and adapted to change a flow section of the circuit, thus varying the coolant flow rate.

However, each type of said known pumps has both advantages and disadvantages.

In such context, in the state of the art, dual drive pumps have been proposed, i.e. comprising both an electric and a mechanical drive in order to provide their respective advantages and remedy their respective disadvantages.

Unfortunately, such pumps have an articulated and bulky structure that causes many difficulties in their placement within the engine compartment of a vehicle; in addition, such pumps also present a particularly complex management of the two drives. An example of such pumps are disclosed in document JP 2003239852 A.

The scope of the present invention is to provide a pump assembly for a cooling system of a vehicle having a dual drive, i.e. both electric and mechanical, which meets the requirements mentioned above, overcoming the aforementioned drawbacks. In other words, the scope is to provide a dual drive pump assembly with a simple and compact structure, possibly entailing simplified management of the two drives.

Such scope is achieved by a pump assembly made according to claim 1. The claims dependent on this claim refer to preferred variant embodiments, having further advantageous aspects.

The object of the present invention is hereinafter described in detail with the aid of the accompanying figures, wherein:
- figure 1 illustrates a perspective view in separate parts of the pump assembly object of the present invention according to a possible embodiment;
- figure 2 represents a front view of the pump assembly shown in figure 1;
- figure 3a and 3b represent two sectional views of the pump assembly respectively along the sectional planes V-V and VI-VI as shown in figure 2;
- figure 4 illustrates a perspective view in separate parts of the pump assembly object of the present invention according to a second embodiment;
- figure 5 represents a front view of the pump assembly shown in figure 4;
- figure 6a and 6b represent two sectional views of the pump assembly respectively along the sectional planes VII-VII and VIII-VIII as shown in figure 5;
- figures 7' and 7" show two perspective views in separate parts of some components of the pump assembly as shown in figure 4;
- figure 8 illustrates a perspective view in separate parts of the pump assembly object of the present invention according to a third embodiment;
- figure 9 represents a front view of the pump assembly shown in figure 8;
- figures 10a and 10b represent two sectional views of the pump assembly respectively along the sectional planes IX-IX and X-X as shown in figure 9;
- figure 11 shows a perspective view in separate parts of some components of the pump assembly as shown in figure 8.

With reference to the aforesaid figures, a pump assembly for a cooling system of a vehicle is indicated collectively at reference number 1. Specifically, such pump assembly 1 is adapted to circulate a predefined amount of coolant in the cooling system. Preferably, said cooling system 1 is fluidically connected to the engine assembly of the vehicle, the engine preferably being of the internal combustion type, and/or to the transmission assembly, or the turbo assembly, or the exhaust gas recirculation assembly for the purpose of regulating the temperature thereof.

Pump assembly 1 comprises an impeller group 2 comprising an impeller 20 rotatable about an impeller axis X-X.

Preferably, the impeller 20 is of the radial type, i.e., it provides that the inlet flow of coolant has an overall substantially axial direction and the outlet flow of coolant has a radial direction.

In addition, the impeller group 2 comprises an impeller shaft 200 which extends along said impeller axis X-X integrally connected to the impeller 20 to move it in rotation; i.e., one rotation of the impeller shaft 200 corresponds to one induced rotation of the same impeller 2.

The pump assembly 1 that is the object of this invention provides for a dual drive, i.e., one that is drivable both mechanically and electrically. For this purpose, the pump assembly 1 comprises an electric drive 30 and a mechanical drive 40.

In effect, the pump assembly 1 comprises an electric group 3 comprising an electric drive 30 and an electric shaft 300 rotatable by the electric drive 30. According to a preferred embodiment, the electric drive 30 comprises an electric motor 35. Preferably, the electric motor 35 comprises a rotor 351 fitted onto the electric shaft 300 and a stator 352 encircling said rotor 351. Preferably, said electric motor 35 is controlled in rotation by an electric control board which is comprised in the electric drive 30. Preferably, said rotor 351 is of the dry type, presenting an air gap of limited size relative to the one on electric motor solutions with a wet rotor and thus having greater efficiency relative to the latter.

According to a preferred embodiment of the present invention, as shown in the accompanying figures and widely described hereinafter, the electric drive 30 (e.g., the electric motor 35 and the electric control board thereof) are positioned in proximity of the impeller 20 and thus in proximity of the ducts and chambers through which the coolant flows.

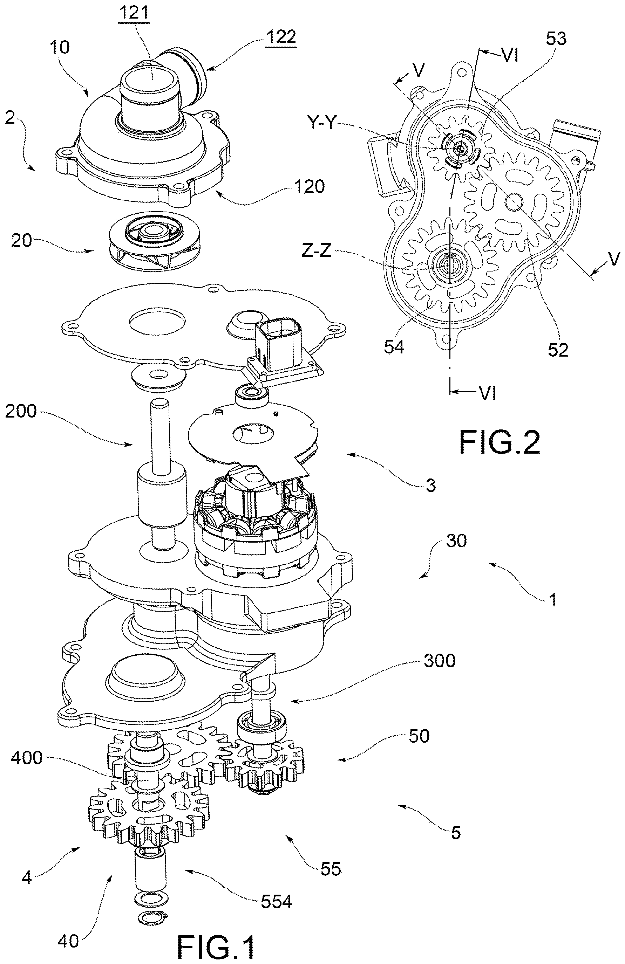

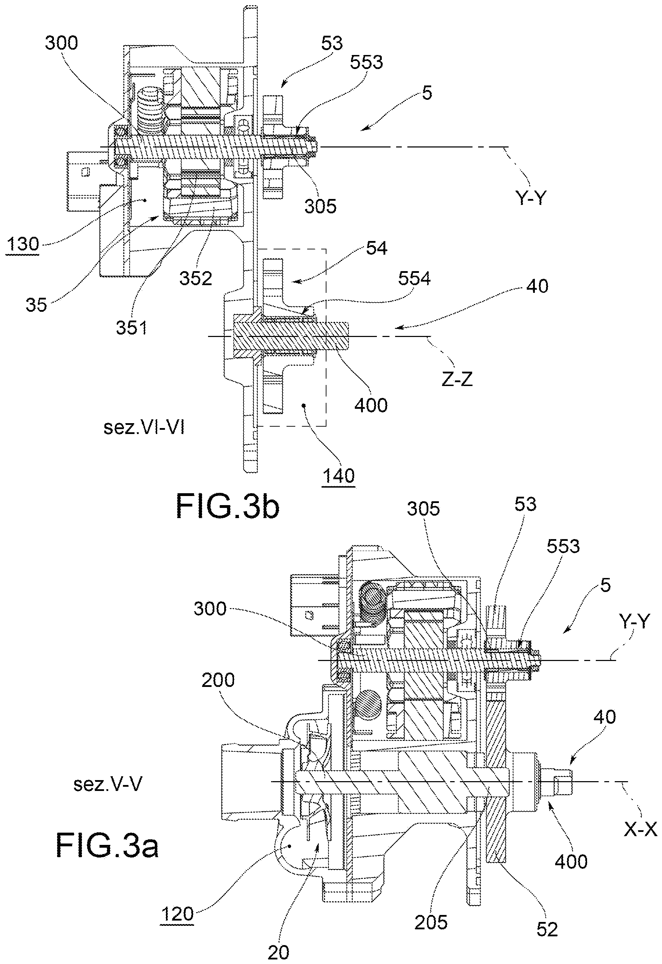

In addition, the pump assembly 1 comprises a mechanical group 4 comprising a mechanical drive 40 and a mechanical shaft 400. Preferably, in some preferred embodiments, said mechanical shaft 400 is controllable in rotation by the mechanical drive 40. In other embodiments, the mechanical shaft 400 is fixed and supports a plurality of components adapted to be placed in rotation thereon. In accordance with a preferred embodiment, the mechanical drive 40 is operatively connectable with mechanical movement means comprised in the vehicle, preferably connected to the drive shaft of the engine. Preferably, such mechanical movement means comprise a gear or a cascade of gears, a joint or a cascade of joints, or flexible elements, for example, comprising a belt or a chain. Therefore, the form of the mechanical drive 40 is according to the type of mechanical movement means: for example, the mechanical drive 40 may be a joint (as shown in the accompanying figures 1 to 3) or a gear (as shown in the accompanying tables 4 to 11) or a pulley.

According to the present invention, the dual drive provided in the pump assembly 1 is obtained by special transmission means 5 comprised in the pump assembly 1.

In other words, the pump assembly 1, object of the present invention, includes transmission means 5 adapted to connect operatively the impeller group 2 with the electric group 3 and the mechanical group 4.

The transmission means 5 include a kinematic transmission assembly 50 comprising:
i) an impeller gear 52 operatively connected to the impeller shaft 200;
ii) a first command gear 53 operatively connected to the electric drive 30 and to the impeller gear 52;
iii) a second command gear 54 operatively connected to the mechanical drive 40 and to the impeller gear 52.

According to a preferred embodiment, the transmission means 5 are adapted to control in rotation the impeller 20 according to certain operating modes respectively of the electric group 3 and/or the mechanical group 4.

In particular, in effect, the transmission means 5 are adapted to control in rotation the speed of the impeller shaft 200.

In effect, the pump assembly 1, object of the present invention, due to the transmission means 5, has the impeller gear 52 controlled in rotation by the first command gear 53 or by the second command gear 54.

In effect, the impeller gear 52 is controlled in rotation by the faster between the first command gear 53 and the second command gear 54.

In other words, the dual drive of the rotation of the impeller 20 is achieved by the transmission means 5 through the kinematic transmission assembly 50. According to the invention, the faster between the electric drive 30 and the mechanical drive 40 controls the impeller 2 in rotation.

The impeller gear 52 is integrally connected to an impeller drive end 205 of the impeller shaft 200 opposite to the end on which is mounted the impeller 2 in a manner such that the rotation of the impeller gear 52 corresponds to the rotation of the impeller shaft 200 and thus of the impeller 20.

According to a preferred embodiment, the rotation speed of the impeller 20 varies according to the type of gears comprised in the kinematic transmission assembly 50. In other words, the speed of the impeller gear 52 is a function of the transmission ratio between the impeller gear 52 and the first command gear 53 and similarly between the impeller gear 52 and the second gear 54.

Preferably, the transmission ratio between the impeller gear 52 and the first command gear 53 is 2 to 1.

Similarly, preferably, the transmission ratio between the impeller gear 52 and the second command gear 54 is 1 to 1.

The transmission means 5 comprise engagement/disengagement means 55 operatively connected to the first command gear 53 and the second command gear 54 in a manner such as to be adapted to keep the faster gear engaged with the respective drive and adapted to disengage the slower gear from the respective drive.

The engagement/disengagement means 55 maintain the engagement/disengagement of the first command gear 53 and the electric shaft 300.

The engagement/disengagement means 55 maintain the engagement/disengagement of the second gear 54 from the mechanical drive 400.

The electric shaft 300 is operatively connected to the first command gear 53 by means of a first unidirectional clutch 553. In other words, the engagement/disengagement means 55 comprise a first unidirectional clutch 553 between the first command gear 53 and the electric shaft 300.

According to a preferred embodiment, the first unidirectional clutch 553 comprises a roller bearing. For example, the roller bearing is of the roller or needle type, having rolling elements located between the driven ring and the driving ring.

Preferably, the first unidirectional clutch 553 is fitted onto an electric drive end 305 of the electric shaft 300 and on it is fitted the first command gear 53. Preferably, the driven ring is fixed on the first command gear 53, and the driving ring is operatively connected to the electric shaft 300. According to a preferred embodiment, the driving ring is integrated on the electric shaft 300.

In accordance with a first embodiment of the invention (shown by way of example in the accompanying figures 1 to 3), the mechanical shaft 400 is operatively connected to the second command gear 54 by means of a second unidirectional clutch 554. In other words, the engagement/disengagement means 55 comprise a second unidirectional clutch 554 interposed between the second command gear 54 and the mechanical shaft 54.

Preferably, the second unidirectional clutch 554 comprises a roller bearing. For example, the roller bearing is of the roller or needle type, having rolling elements located between the driven ring and the driving ring.

Preferably, the second unidirectional clutch 554 is fitted onto a mechanical drive end 405 of the mechanical shaft 400, and on it is fitted the second command gear 54. Preferably, the driven ring is fixed on the second command gear 54 and the driving ring is operatively connected to the mechanical shaft 400. According to a preferred embodiment, the driving ring is integrated on the electric shaft 400.

In accordance with the first embodiment described above, the engagement/disengagement means 55 maintain the engagement between the fastest shaft/gear components, i.e. they keep the fastest gear connected to the respective shaft, which in turn controls the rotation of the impeller gear; conversely, the engagement/disengagement means 55 disengage the slowest shaft/gear components; in this way the (slow) gear rotates in idle relative to the respective shaft.

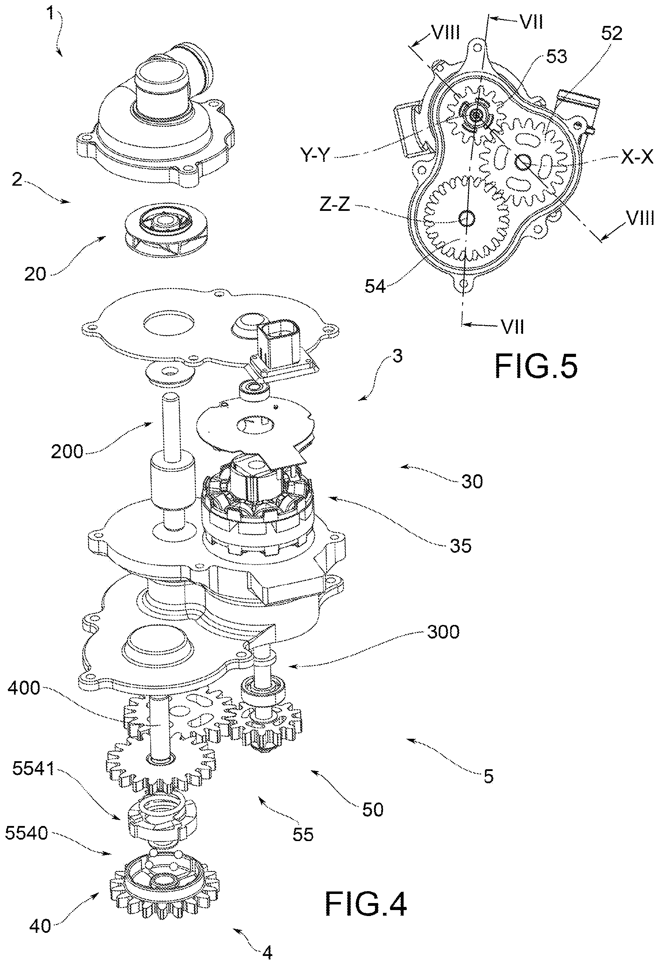

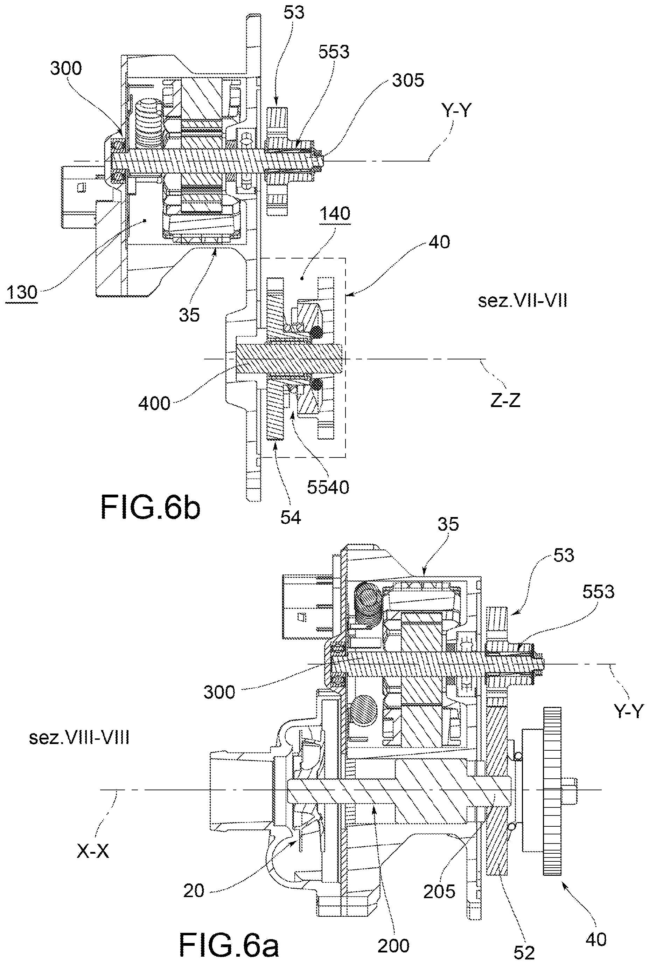

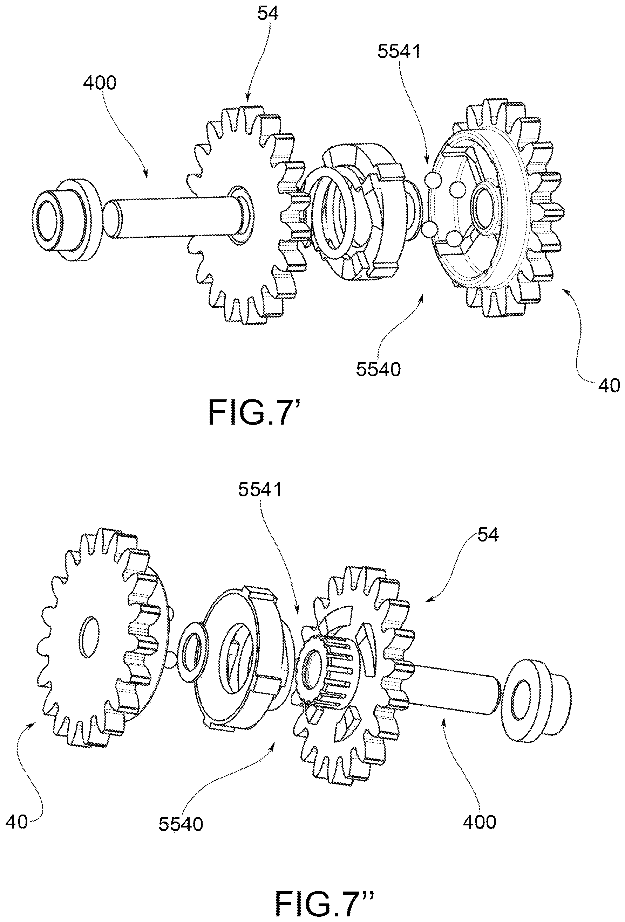

According to a second embodiment of the invention (shown by way of example in the accompanying figures 4 to 7), the second command gear 54 is operatively connected to the mechanical drive 40 by means of a mechanical engagement/disengagement device 5540. In other words, engagement/disengagement means 55 comprise a mechanical engagement/disengagement device 5540 interposed between a second command gear 54 and a mechanical drive 40.

According to this second embodiment of the invention, the mechanical engagement/disengagement device 5540 is adapted to carry out the engagement between the mechanical drive 40 and the second command gear 54 in a configuration wherein the rotation speed of the mechanical drive 40 is greater than a predefined threshold value. In other words, in effect, by exploiting the centrifugal force due to the rotation induced by the mechanical drive 40, upon command of the drive shaft of the vehicle, the mechanical engagement/disengagement device 5540 carries out the engagement between the mechanical drive 40 and the second command gear 54 when a predefined speed is exceeded.

Preferably, said threshold value corresponds to a rotation speed of 3000-3500 revolutions per minute.

For example, in a preferred embodiment, the mechanical engagement/disengagement device 5540 comprises a clutch with centrifugal actuator 5541. Preferably, said clutch with centrifugal actuator is of the front tooth type, or of the axial friction disc type.

According to such preferred embodiment, the mechanical shaft 400 is fixed and supports in rotation the second command gear 54 and the mechanical engagement/disengagement device 5540 to allow reciprocating engagement according to the rotation of the mechanical drive 40.

In accordance with the first two described embodiments, under high load conditions, for example when the vehicle is towing a load or faces an uphill road, typically at low speeds (for example at low RPMs), the electric drive 30 is activated so as to bring the electric shaft 300 in rotation at a rotation speed greater than that induced by the mechanical drive 40, inducing thus the impeller gear 52, and thus the impeller shaft 200, and thus the impeller 20, to rotate as a function of the speed induced by the electric shaft 300. Specifically, in such configuration, the second unidirectional clutch 554 or the mechanical engagement/disengagement device 5540 are adapted to release the second command gear 54 from the mechanical drive 40.

According to a further example, at the end of the use of the vehicle, if the coolant is still very hot, the electric drive 30 is activated so as to keep the impeller gear 52 in rotation, and thus the impeller shaft 200 and the impeller 20 (such phase is thus called "post run"). In this way, the impeller 20 rotates at a predefined rotation speed, while the mechanical drive 40 is completely inactive, since the vehicle's engine is stopped. Also in this case, the second unidirectional clutch 554 or the mechanical engagement/disengagement device 5540 is adapted to disengage the second command gear 54 from the mechanical drive 40.

In addition, in the second embodiment, the pump assembly 1 is adapted to carry out effectively the "warm-up" phase (typically when starting the vehicle when the engine is still cold), keeping the mechanical drive 40 disengaged (by using the vehicle under the threshold speed) and at the same time commanding the deactivation of the electric drive 30. In such circumstances, therefore, the impeller shaft 200, and consequently the impeller 20, remain stationary, the liquid does not circulate in the circuit, and the engine heats up faster. In general, therefore, the electric drive 30 is activatable whenever it is necessary to increase the cooling capacity, independently of the mechanical drive 40, which is linked to the engine speed.

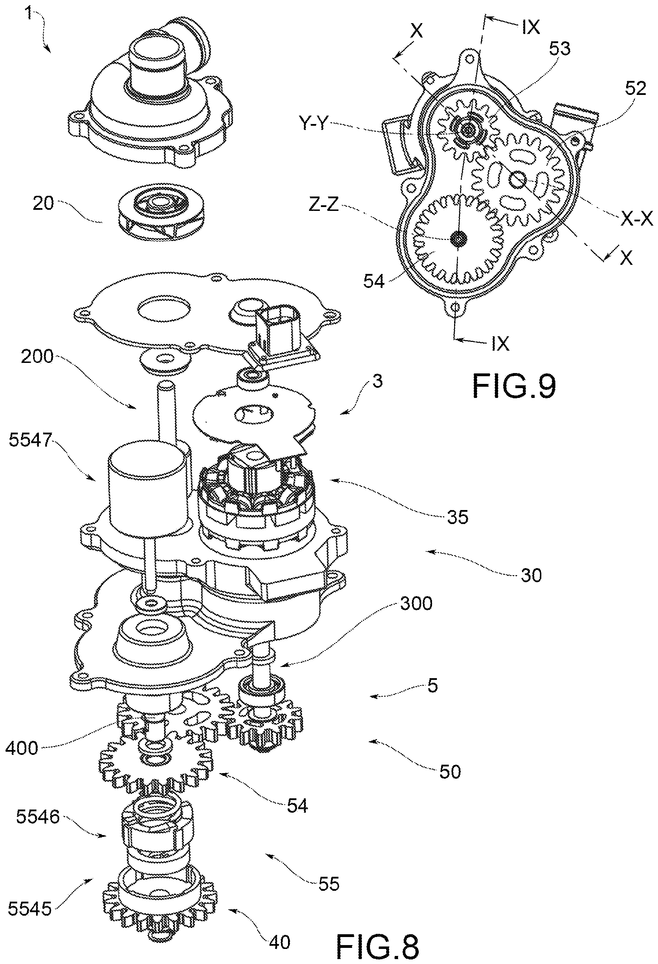

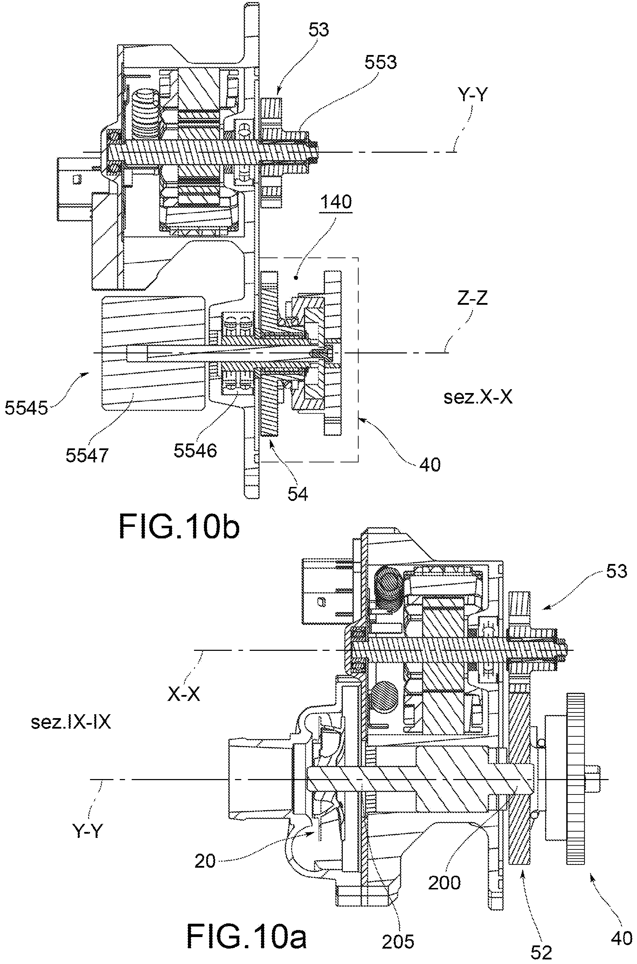

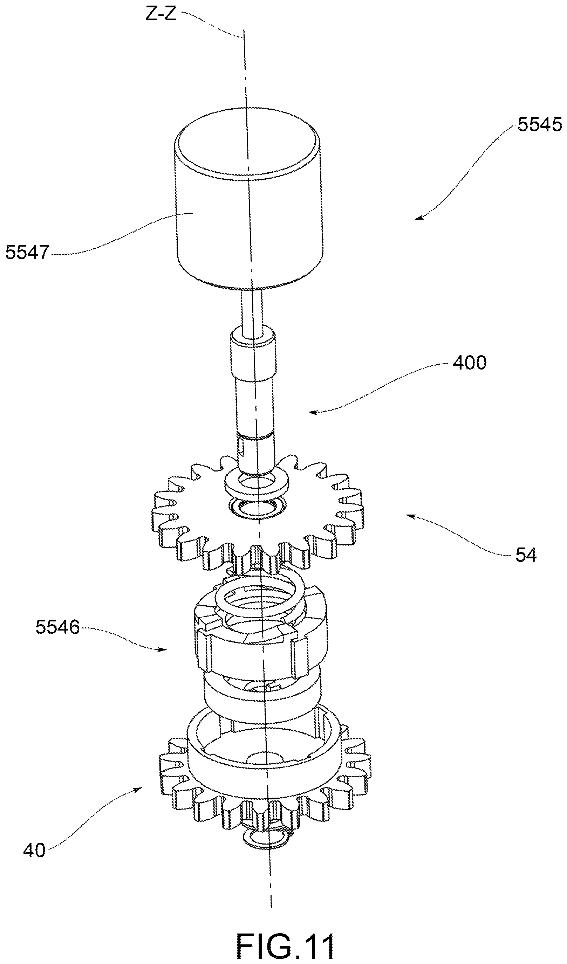

According to a third embodiment of the invention (shown by way of example in the accompanying figures 8 to 11), the second command gear 54 is operatively connected to the mechanical drive 40 by means of an electric engagement/disengagement device 5545. In other words, the engagement/disengagement means 55 comprise an electric engagement/disengagement device 5545 interposed between the second command gear 54 and the mechanical drive 40.

According to this embodiment of the invention, the electricengagement/disengagement device 5545 is adapted to carry out the engagement between the mechanical drive 40 and the second command gear 54 as a function of certain operative conditions of the vehicle.

In other words, the electric engagement/disengagement device 5545 is electrically commandable in engagement or in disengagement according to the needs of the pump assembly and/or the vehicle itself and/or the way the driver uses the vehicle. For example, the electric engagement/disengagement device 5545 is operatively connected to the control unit of the vehicle.

According to the needs of the vehicle, regardless of the rotation speed induced by the mechanical drive 40, the electronic engagement/disengagement device 5545 maintains the second command gear 54 and the mechanical drive 40 in such a way that only the rotation induced by the impeller 20 is directly connected to the operative modes of the electric group 30. In other words, in this third embodiment, the pump assembly 1 is adapted to carry out effectively the "warm-up" phase (typically when starting the vehicle when the engine is still cold) by disengaging the mechanical drive 40 and at the same time commanding the deactivation of the electric drive 30. In such circumstances, the impeller gear 52, and thus the impeller shaft 200 and consequently the impeller 20, remain stationary, the liquid does not circulate in the circuit, and the engine heats up faster.

For example, in a preferred embodiment, the electric engagement/disengagement device 5545 comprises a front clutch 5546 and an electric actuator 5547 adapted to drive the front clutch 5546. Preferably, this front clutch is of the front tooth type, or of the axial friction disc type, and the interaction between the front teeth and/or the axial friction discs is controlled by the electric actuator 5546.

According to such preferred embodiment, the mechanical shaft 400 is fixed and supports in rotation the second command gear 54 and the electric engagement/disengagement device 5545 to allow the reciprocating engagement according to the rotation of the mechanical drive 40. According to a preferred embodiment, the electric shaft 300 extends along a first axis Y-Y, while the mechanical shaft 400 extends along a second axis Z-Z.

In one embodiment, the impeller axis X-X, the first axis Y-Y and the second axis Z-Z lie in three different planes.

In a further embodiment, the impeller axis X-X, the first axis Y-Y and the second axis Z-Z lie in pairs in different planes.

For example, in a variant embodiment, the first axis Y-Y and/or the second axis Z-Z are arranged parallel to the impeller axis X-X. In a still further variant embodiment, the three axes are arranged parallel to each other.

According to a preferred embodiment, similarly to that which is shown in the accompanying figures, the electric group 3, the mechanical group 4 and the transission means 5 are positioned behind the impeller 20. Preferably, the transmission means 5 are located distally from the impeller 2. Preferably, the electric drive 3 is located in proximity to the impeller 2.

According to a preferred embodiment, the pump assembly 1 comprises a pump body 10 delimiting an impeller chamber 120 housing the impeller 20 and containing the cooling liquid in transit. Preferably, the impeller chamber 120 has an inlet mouth 121 through which the coolant, sucked in, enters, and an outlet port 122 through which the coolant, pressed out, leaves.

According to a preferred embodiment, the pump body 10 also comprises an electric housing chamber 130 in which the electric motor 30 is housed; preferably, such electric housing chamber 130 is insulated from the coolant.

In addition, according to a further preferred embodiment, the pump body 10 also comprises a mechanical housing chamber 140 in which the mechanical drive 40 is houseable. Preferably, the mechanical housing chamber 140 is insulated from the coolant.

In addition, according to a preferred embodiment, the transmission means 5 are housed in a transmission chamber which is fluidically connected to a vehicle lubrication system, for example, a lubrication system of an engine assembly or gearbox assembly comprised in the vehicle. In accordance with a preferred embodiment, this transmission chamber comprises the mechanical housing chamber 140 described above.

In a preferred embodiment, in effect, the pump assembly 1 is mountable on an engine assembly of a vehicle and the transmission chamber obtained on said engine assembly (for example on the base thereof) . In other words, the pump body 10 is flanged so that it is mountable on an engine assembly.

In a variant embodiment, the pump assembly 1 is mountable on a gearbox assembly of a vehicle and the transmission chamber obtained on said gearbox assembly (for example on the base thereof). In other words, the pump body 10 is flanged so that it may be mounted on a gearbox assembly.

In other words, according to a preferred embodiment, the transmission means are in an "oil bath" with the oil of the engine assembly and/or the gearbox assembly.

According to the aforesaid preferred embodiments, the pump assembly 1 has a single sealing element adapted to sealingly separate the impeller chamber 120 from the other components of the pump assembly.

It should be noted that in the present discussion, the term "gear" is intended in a general sense to refer to "toothed wheels".

In accordance with all embodiments of the invention, the gears comprised in the pump assembly are operatively connected directly to each other, engaging the respective teeth thereof.

However, embodiments are also envisaged, wherein the gears comprised in the pump assembly are operatively connected to each other indirectly, by means of flexible transmission elements comprising belts or chains, which in turn are comprised in the kinematic transmission assembly. Those embodiments do not belong to the claimed invention.

The gears (i.e. the toothed wheels) have respective forms according to the arrangement of the various axes on which the described shafts lie, and according to the described modes of reciprocating connection.

Innovatively, the pump assembly object of the present invention satisfies the engine cooling requirements and overcomes the drawbacks typical in the state-of-the-art solutions mentioned above.

Advantageously, the pump assembly is very flexible, as it responds to the cooling needs of the vehicle according to the actual demand and not according to the engine speed or the availability of electrical power of the system. This means that, advantageously, the pump assembly is particularly suited to handle the entire amount of coolant in the cooling system, for example by managing the cooling of other vehicle components in addition to the engine, such as, for example, the turbo assembly. This saves additional space in the engine compartment.

Moreover, advantageously, the pump assembly is particularly compact and of small size, being particularly adapted to be housed in the engine compartment of a motor vehicle.

Moreover, the pump assembly has much lower loads on the impeller shaft than the loads typically found on the impeller shaft in state-of-the-art embodiments, and the impeller shaft and the means supporting it in rotation are designable accordingly; advantageously, in effect, due to the transmission means, the radial loads on the impeller shaft are reduced to zero, and the impeller shaft is thus designable to be compact in size.

Moreover, advantageously, the impeller (and the impeller chamber with the volute) is more compact and not oversized and thus operates always in conditions of optimum efficiency with respect to the known pump assemblys, where the impeller is often oversized to compensate for the poor flexibility of mechanical pumps and the limited power of the electric pumps.

Advantageously, the pump assembly is designable with a wide use of plastic materials.

Advantageously, the design of the mechanical drive and the electric drive is extremely simplified and are optimizable by the designer. Advantageously, the pump assembly is also designable with an arrangement of the various drives according to the space available in the engine compartment itself.

Moreover, advantageously, the transition from electric to mechanical drive and vice versa is managed by the transmission means, ensuring a particularly simplified electronic management of the pump assembly.

In a further advantageous aspect, the pump assembly has the "fail-safe" feature; in effect, in the event of an electric drive failure, the pump assembly, due to the mechanical drive, continues to ensure the movement of the impeller.

According to a further advantageous aspect, the pump assembly is operative in "post-run" conditions, i.e. with the engine turned off.

According to a still further advantageous aspect, the pump assembly is operative also in "warm-up" conditions, i.e. when the engine is started (in particular, in the second, but especially in the third embodiment described above).

Advantageously, the electric drive is completely disconnected from the impeller shaft, thus offering greater electric efficiency and a wider electric operating range. Similarly, the rotor is envisageable to be of the dry type, thus having a higher electric efficiency and a wider electric operating range.

Moreover, advantageously, the transmission means is designable according to the hydraulic requirements of the pump and the characteristics of the drives, for example, by providing specific transmission ratios.

Advantageously, the transmission means is regreaseable directly with the lubricant already in circulation in the vehicle, for example with the oil in circulation in the engine assembly or with the oil in circulation in the gearbox assembly.

Advantageously, the pump assembly is directly combinable with the said engine and/or gearbox assembly in such a way that the transmission chamber is directly obtained on said components.

It is clear that a person skilled in the art, in order to meet contingent needs, may make changes to the pump assembly, all contained within the scope of protection solely defined by the following claims.

Furthermore, each variant described as belonging to a possible embodiment may be achieved independently of the other described variants.

## Claims

1. Pump assembly (1) for a cooling system of a vehicle comprising:
- an impeller group (2) comprising an impeller (20) rotatable around an impeller axis (X-X) and an impeller shaft (200) extending along the impeller axis (X-X) integrally connected to the impeller (2) to move it in rotation;
- an electric group (3) comprising an electric drive (30), comprising an electric motor (35), and an electric shaft (300) rotatable by the electric drive (3);
- a mechanical group(4) comprising a mechanical drive (40) and a mechanical shaft (400);
- transmission means (5) comprising a kinematic transmission assembly (50) comprising:
i) an impeller gear (52) integrally connected to an impeller drive end (205) of the impeller shaft (200) opposite to the end whereon is mounted the impeller (2);
ii) a first command gear (53) operatively connected to the electric shaft (300) and to the impeller gear (52);
iii) a second command gear (54) operatively connected to the mechanical shaft (400) and to the impeller gear (52);
iv) engagement/disengagement means (55) comprising a first unidirectional clutch (553) that operatively connects the electric shaft (300) to the first command gear (53) and comprising a second unidirectional clutch (554) or a mechanical engagement/disengagement device (5540) or a electric engagement/disengagement device (5545) that operatively connects the mechanical shaft (400) to the second command gear (54);
wherein the impeller gear (52) is commanded in rotation by means of engagement/disengagement means (55) by the faster of the first command gear (53) and the second command gear (54) ;
wherein the pump assembly (1) is **characterized by** the fact that the gears comprised in the kinematic transmission assembly (50) are operatively connected in a direct way.

2. Pump assembly (1) according to claim 1, wherein the mechanical drive (40) is adapted to command in rotation the second command gear (54) on the mechanical shaft (400) or is adapted to command in rotation the second command gear (54) commanding in rotation the mechanical shaft (400) .

3. Pump assembly (1) according to any one of the preceding claims, wherein the second command gear (54) is operatively connected to the mechanical drive (40) by means of a suitable mechanical engagement/disengagement device (5540) adapted to carry out the engagement between the second command gear (54) and the mechanical drive (40) in a configuration wherein the mechanical rotation speed of the mechanical drive (40) is greater than a predetermined threshold value.

4. Pump assembly (1) according to claim 3, wherein the mechanical engagement/disengagement device (5540) comprises a clutch with centrifugal actuator (5541).

5. Pump assembly (1) according to any one of the preceding claims, wherein the second command gear (54) is operatively connected to the mechanical drive (40) by means of an electric engagement/disengagement device (5545) adapted to carry out the engagement between the second command gear (54) and the mechanical drive (40) as a function of the vehicle's determined operative function.

6. Pump assembly (1) according to claim 5, wherein the electric engagement/disengagement device (5545) comprises a front clutch (5546) adapted to engage or disengage the second command gear (54) of the mechanical drive (40) and an electric actuator (5547) adapted to drive the front clutch (5546).

7. Pump assembly (1) according to any one of the preceding claims, wherein the electric shaft (300) extends along a first axis (Y-Y) and the mechanical shaft (400) extends along a second axis (Z-Z), wherein the first axis (Y-Y) and/or the second axis (Z-Z) are arranged parallel to the impeller axis (X-X).

8. Pump assembly (1) according to any one of the preceding claims, wherein the mechanical drive (4) is operatively connectable to mechanical handling means comprised in the vehicle, preferably connected to the engine's drive shaft.

9. Pump assembly (1) according to any one of the preceding claims, wherein the transmission means (5) are housed in a transmission chamber which is fluidically connectable to a vehicle lubrication system, for example a lubrication system of an engine assembly or gearbox assembly comprised in the vehicle.

10. Pump assembly (1) according to claim 9, wherein the pump assembly (1) is mountable on an engine assembly of a vehicle and the transmission chamber is formed on said engine assembly.

11. Pump assembly (1) according to claim 9, wherein the pump assembly (1) is mountable on a gearbox assembly of a vehicle and the transmission chamber is formed on said gearbox assembly.

## Patentansprüche

1. Pumpenanordnung (1) für ein Kühlsystem eines Fahrzeugs, umfassend:
- eine Laufradgruppe (2), umfassend ein Laufrad (20), das um eine Laufradachse (X-X) drehbar ist, und eine Laufradwelle (200), die sich entlang der Laufradachse (X-X) erstreckt, die integral bzw. einstückig mit dem Laufrad (2) verbunden ist, um es in Rotation zu versetzen;
- eine elektrische Gruppe (3), umfassend einen elektrischen Antrieb (30), umfassend einen Elektromotor (35) und eine durch den elektrischen Antrieb (3) drehbare elektrische Welle (300);
- eine mechanische Gruppe (4), umfassend einen mechanischen Antrieb (40) und eine mechanische Welle (400);
- Übertragungs bzw. Getriebemittel (5), umfassend eine kinematische Übertragungs- bzw. Getriebeanordnung (50), umfassend:
i) ein Laufradzahnrad (52), das integral bzw. einstückig mit einem Laufradantriebsende (205) der Laufradwelle (200) gegenüber bzw. entgegengesetzt dem Ende verbunden ist, auf dem das Laufrad (2) montiert ist;
ii) ein erstes Befehlszahnrad (53), das operativ mit der elektrischen Welle (300) und dem Laufradzahnrad (52) verbunden ist;
iii) ein zweites Befehlszahnrad (54), das operativ mit der mechanischen Welle (400) und dem Laufradzahnrad (52) verbunden ist;
iv) Einrück-/Ausrückmittel bzw. Eingriffs-/Außereingriffsmittel (55), umfassend eine erste unidirektionale Kupplung (553), welche die elektrische Welle (300) operativ mit dem ersten Befehlszahnrad (53) verbindet, und umfassend eine zweite unidirektionale Kupplung (554) oder eine mechanische Einrück-/Ausrückvorrichtung bzw. Eingriffs-/Außereingriffsvorrichtung (5540) oder eine elektrische Einrück-/Ausrückvorrichtung bzw. Eingriffs-/Außereingriffsvorrichtung (5545), welche die mechanische Welle (400) operativ mit dem zweiten Befehlszahnrad (54) verbindet;
wobei das Laufradzahnrad (52) mittels der Einrück-/Ausrückmittel (55) durch das schnellere des ersten Befehlszahnrads (53) und des zweiten Befehlszahnrads (54) in Rotation befohlen bzw. versetzt wird;
wobei die Pumpenanordnung (1) durch die Tatsache gekennzeichnet ist, dass die in der kinematischen Getriebeanordnung (50) enthaltenen Zahnräder auf direkte Weise operativ verbunden sind.

2. Pumpenanordnung (1) nach Anspruch 1, wobei der mechanische Antrieb (40) angepasst ist, das zweite Befehlszahnrad (54) an bzw. auf der mechanischen Welle (400) in Rotation zu befehlen bzw. zu versetzen, oder angepasst ist, das zweite Befehlszahnrad (54) in Rotation zu befehlen bzw. zu versetzen, das die mechanische Welle (400) in Rotation befiehlt bzw. versetzt.

3. Pumpenanordnung (1) nach einem der vorhergehenden Ansprüche, wobei das zweite Befehlszahnrad (54) operativ mit dem mechanischen Antrieb (40) mittels einer geeigneten mechanischen Einrück-/Ausrückvorrichtung bzw. Eingriffs-/Außereingriffsvorrichtung (5540) verbunden ist, die angepasst ist, den Eingriff zwischen dem zweiten Befehlszahnrad (54) und dem mechanischen Antrieb (40) in einer Konfiguration durchzuführen, in der die mechanische Drehzahl bzw. Rotationsgeschwindigkeit des mechanischen Antriebs (40) größer als ein vorbestimmter Schwellenwert ist.

4. Pumpenanordnung (1) nach Anspruch 3, wobei die mechanische Einrück-/Ausrückvorrichtung (5540) eine Kupplung mit einem Zentrifugalaktuator (5541) umfasst.

5. Pumpenanordnung (1) nach einem der vorhergehenden Ansprüche, wobei das zweite Befehlszahnrad (54) operativ mit dem mechanischen Antrieb (40) mittels einer elektrischen Einrück-/Ausrückvorrichtung bzw. Eingriffs-/Außereingriffsvorrichtung (5545) verbunden ist, die angepasst ist, den Eingriff zwischen dem zweiten Befehlszahnrad (54) und dem mechanischen Antrieb (40) als eine Funktion der bestimmten Betriebsfunktion des Fahrzeugs durchzuführen.

6. Pumpenanordnung (1) nach Anspruch 5, wobei die elektrische Einrück-/Ausrückvorrichtung (5545) eine vordere Kupplung (5546), die angepasst ist, das zweite Befehlszahnrads (54) des mechanischen Antriebs (40) einzurücken oder auszurücken, und einen elektrischen Aktuator (5547) umfasst, der angepasst ist, die vordere Kupplung (5546) anzutreiben.

7. Pumpenanordnung (1) nach einem der vorhergehenden Ansprüche, wobei sich die elektrische Welle (300) entlang einer ersten Achse (Y-Y) erstreckt und sich die mechanische Welle (400) entlang einer zweiten Achse (Z-Z) erstreckt, wobei die erste Achse (Y-Y) und/oder zweite Achse (Z-Z) parallel zu der Laufradachse (X-X) angeordnet sind.

8. Pumpenanordnung (1) nach einem der vorhergehenden Ansprüche, wobei der mechanische Antrieb (4) operativ mit mechanischen Handhabungs- bzw. Betätigungsmitteln verbindbar ist, die in dem Fahrzeug enthalten sind, und zwar vorzugsweise mit der Antriebswelle des Motors verbunden.

9. Pumpenanordnung (1) nach einem der vorhergehenden Ansprüche, wobei die Übertragungs- bzw. Getriebemittel (5) in einer Getriebekammer untergebracht sind, die fluidisch mit einem Fahrzeugschmiersystem verbindbar ist, beispielsweise einem Schmiersystem einer in dem Fahrzeug enthaltenen Motoranordnung oder Getriebe- bzw. Getriebegehäuseanordnung.

10. Pumpenanordnung (1) nach Anspruch 9, wobei die Pumpenanordnung (1) an einer Motoranordnung eines Fahrzeugs montierbar ist und die Getriebekammer an der Motoranordnung ausgebildet ist.

11. Pumpenanordnung (1) nach Anspruch 9, wobei die Pumpenanordnung (1) an einer Getriebe- bzw. Getriebegehäuseanordnung eines Fahrzeugs montierbar ist und die Getriebekammer an der Getriebe- bzw. Getriebegehäuseanordnung ausgebildet ist.

## Revendications

1. Ensemble pompe (1) pour un système de refroidissement d'un véhicule comprenant :
- un groupe turbine (2) comprenant une turbine (20) apte à être mise en rotation autour d'un axe de turbine (X-X) et un arbre de turbine (200) s'étendant le long de l'axe de turbine (X-X) relié de manière solidaire à la turbine (2) pour la déplacer en rotation ;
- un groupe électrique (3) comprenant un entraînement électrique (30), comprenant un moteur électrique (35), et un arbre électrique (300) apte à être mis en rotation par l'entraînement électrique (3) ;
- un groupe mécanique (4) comprenant un entraînement mécanique (40) et un arbre mécanique (400) ;
- des moyens de transmission (5) comprenant un ensemble de transmission cinématique (50) comprenant :
i) un pignon de turbine (52) relié de manière solidaire à une extrémité d'entraînement de turbine (205) de l'arbre de turbine (200) opposée à l'extrémité sur laquelle est montée la turbine (2) ;
ii) un premier pignon de commande (53) relié de manière opérationnelle à l'arbre électrique (300) et au pignon de turbine (52) ;
iii) un second pignon de commande (54) relié de manière opérationnelle à l'arbre mécanique (400) et au pignon de turbine (52) ;
iv) des moyens de mise en prise/désolidarisation (55) comprenant un premier embrayage unidirectionnel (553) qui relie de manière opérationnelle l'arbre électrique (300) au premier pignon de commande (53) et comprenant un second embrayage unidirectionnel (554) ou un dispositif de mise en prise/désolidarisation mécanique (5540) ou un dispositif de mise en prise/désolidarisation électrique (5545) qui relie de manière opérationnelle l'arbre mécanique (400) au second pignon de commande (54) ;
dans lequel le pignon de turbine (52) est commandé en rotation au moyen de moyens de mise en prise/désolidarisation (55) par le plus rapide parmi le premier pignon de commande (53) et le second pignon de commande (54) ;
dans lequel l'ensemble pompe (1) est **caractérisé par le fait que** les pignons compris dans l'ensemble de transmission cinématique (50) sont reliés de manière opérationnelle d'une manière directe.

2. Ensemble pompe (1) selon la revendication 1, dans lequel l'entraînement mécanique (40) est adapté pour commander en rotation le second pignon de commande (54) sur l'arbre mécanique (400) ou est adapté pour commander en rotation le second pignon de commande (54) commandant en rotation l'arbre mécanique (400).

3. Ensemble pompe (1) selon l'une quelconque des revendications précédentes, dans lequel le second pignon de commande (54) est relié de manière opérationnelle à l'entraînement mécanique (40) au moyen d'un dispositif de mise en prise/désolidarisation mécanique approprié (5540) adapté pour effectuer la mise en prise entre le second pignon de commande (54) et l'entraînement mécanique (40) dans une configuration dans laquelle la vitesse de rotation mécanique de l'entraînement mécanique (40) est supérieure à une valeur seuil prédéterminée.

4. Ensemble pompe (1) selon la revendication 3, dans lequel le dispositif de mise en prise/désolidarisation mécanique (5540) comprend un embrayage à actionneur centrifuge (5541).

5. Ensemble pompe (1) selon l'une quelconque des revendications précédentes, dans lequel le second pignon de commande (54) est relié de manière opérationnelle à l'entraînement mécanique (40) au moyen d'un dispositif de mise en prise/désolidarisation électrique (5545) adapté pour effectuer la mise en prise entre le second pignon de commande (54) et l'entraînement mécanique (40) en fonction de la fonction opérationnelle du véhicule déterminée.

6. Ensemble pompe (1) selon la revendication 5, dans lequel le dispositif de mise en prise/désolidarisation électrique (5545) comprend un embrayage avant (5546) adapté pour mettre en prise ou désolidariser le second pignon de commande (54) de l'entraînement mécanique (40) et un actionneur électrique (5547) adapté pour entraîner l'embrayage avant (5546).

7. Ensemble pompe (1) selon l'une quelconque des revendications précédentes, dans lequel l'arbre électrique (300) s'étend le long d'un premier axe (Y-Y) et l'arbre mécanique (400) s'étend le long d'un second axe (Z-Z), dans lequel le premier axe (Y-Y) et/ou le second axe (Z-Z) sont agencés parallèlement à l'axe de turbine (X-X).

8. Ensemble pompe (1) selon l'une quelconque des revendications précédentes, dans lequel l'entraînement mécanique (4) est apte à être relié de manière opérationnelle à des moyens de manipulation mécanique compris dans le véhicule, de préférence reliés à l'arbre d'entraînement du moteur.

9. Ensemble pompe (1) selon l'une quelconque des revendications précédentes, dans lequel les moyens de transmission (5) sont logés dans une chambre de transmission qui est apte à être reliée de manière fluidique à un système de lubrification de véhicule, par exemple un système de lubrification d'un ensemble moteur ou d'un ensemble boîte de vitesses compris dans le véhicule.

10. Ensemble pompe (1) selon la revendication 9, dans lequel l'ensemble pompe (1) est apte à être monté sur un ensemble moteur d'un véhicule et la chambre de transmission est formée sur ledit ensemble moteur.

11. Ensemble pompe (1) selon la revendication 9, dans lequel l'ensemble pompe (1) est apte à être monté sur un ensemble boîte de vitesses d'un véhicule et la chambre de transmission est formée sur ledit ensemble boîte de vitesses.
